(19) Europäisches Patentamt
European Patent Office
Office européen des brevets

(11) EP 0 513 812 B1

(12) EUROPEAN PATENT SPECIFICATION

(45) Date of publication and mention of the grant of the patent: **27.03.1996 Bulletin 1996/13**

(51) Int Cl.$^6$: **C08L 71/10**, C08L 67/02, C08L 67/04, C08L 77/00, C08G 65/48

(21) Application number: **92108228.5**

(22) Date of filing: **15.05.1992**

# (54) Thermoplastic resin composition

Thermoplastische Harzzusammensetzung

Composition de résine thermoplastique

(84) Designated Contracting States:
**DE FR GB IT NL**

(30) Priority: **16.05.1991 JP 139412/91**
**24.05.1991 JP 148197/91**

(43) Date of publication of application:
**19.11.1992 Bulletin 1992/47**

(73) Proprietor: **MITSUBISHI CHEMICAL CORPORATION**
**Chiyoda-ku, Tokyo (JP)**

(72) Inventors:
- **Arashiro, Yusuke, c/o Mitsubishi Petroch. Co.Ltd. Yokkaichi-shi, Mie (JP)**
- **Tsukahara, Toru, c/o Mitsubishi Petroch. Co.Ltd. Yokkaichi-shi, Mie (JP)**
- **Yamauchi, Shinichi, c/o Mitsubishi Petroch. Co.Ltd Yokkaichi-shi, Mie (JP)**
- **Aritomi, Mitsutoshi, c/o Mitsubishi Petroch.Co.Ltd Yokkaichi-shi, Mie (JP)**

(74) Representative: **Hansen, Bernd, Dr.rer.nat. et al**
**Hoffmann, Eitle & Partner**
**Patentanwälte**
**Postfach 81 04 20**
**D-81904 München (DE)**

(56) References cited:
**EP-A- 0 382 547** **US-A- 3 378 505**

- **PATENT ABSTRACTS OF JAPAN vol. 14, no. 370 (C-747)(4313) 10 August 1990 & JP-A-21 35 246 (JAPAN SYNTHETIC RUBBER CO.) 24 May 1990**
- **PATENT ABSTRACTS OF JAPAN vol. 14, no. 220 (C-717)(4163) 10 May 1990 & JP-A-25 1 555 (UBE IND LTD) 21 February 1990**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to a thermoplastic resin composition providing molded articles having excellent appearance, organic solvent resistance and thermal rigidity. More particularly, it relates to an engineering plastic comprising (A) a hydroxy-substituted poly(phenylene ether) ether resin having a polyphenylene ether skeleton and a specific alcoholic hydroxyl group and (B) a thermoplastic resin selected from a saturated polyester resin and a polyamide resin.

### BACKGROUND OF THE INVENTION

Polyphenylene ether resins (hereinafter referred to as PPE) are engineering plastics having excellent heat resistance, dimensional stability, non-hygroscopicity, and electrical properties and are useful as electrical parts, automobile parts, and industrial parts. However, this resin has a high melt viscosity due to glass transition point resulting in poor moldability, solvent resisitance and impact resisitance, for example, for use as engineering plastic. To overcome these disadvantages, it has been proposed to blend other resins with PPE. For example, U.S. Patent 3,383,435 suggests to blend a styrene resin or a high-impact polystyrene (HIPS) with PPE to improve moldability, but the problem of poor solvent resistance is still unmitigated.

On the other hand, polybutylene terephthalate (hereinafter abbreviated as PBT) and polyamide are widely employed as engineering plastics in the field of automobile parts and electric and electronic parts because of their excellent moldability, solvent resistance, and mechanical strength. However, molded articles obtained from these resins suffer from the problems of significant, molding shrinkage and high linear expansion, and also exhibit poor thermal stability in rigidity at high temperatures.

In corporation of reinforcing material, such as glass fiber, into PBT or polyamide has been attempted to overcome these problems, but the resulting molded articles have deteriorated appearance and thus have limited application. Hence, a composition which compensates for unfavorable properties inherent in PPE and PBT or polyamide, while retaining the respective favourable properties, would be an excellent molding material with broad applications and high industrial significance.

To this effect, a composition prepared by mere mixing of PPE and PBT was proposed as described in JP-B-51-21664 (the term "JP-B" as used herein means an "examined published Japanese patent application"), JP-A-49-50050, JP-A-49-75662, and JP-A-59-159847 (the term "JP-A" as used herein means an "unexamined published Japanese patetn application").

However, these conventional mere blends PPE and PBT have the following problem. That is, since PPE has poor compatibility with PBT and is substantially incompatible (due to lack of the affinity) with PBT, the interface of the two phase structure has insufficient adhesion so that the two phases hardly form a uniform and fine dispersion. Such polymer blends are apt to undergo delamination under a shearing stress on molding, such as injection molding, and the resulting molded articles suffer from the problems of deteriorated appearance or defects formed at the interface of the two phases. Therefore, a composition excellent in mechanical characteristics, e.g., dimensional precision, heat resistance and rigidity, and physical characteristics, e.g., solvent resistance, cannot be obtained.

Similarly, a composition obtained by mere melt-mixing of polymer blends of PPE and a polyamide resin having excellent heat resistance, solvent resistance, and moldability was proposed as described in U.S. Patents 3,379,792 and 4,338,421, JP-B-45-997, and JP-B-59-41663. However, insufficient compatibility between these two resins has prevented the polymer blends thereof from achieving mechanical strength on the level demanded in the field of industrial materials.

One general approach taken for solving the above-described problem associated with a polymer blend of PPE and a saturated polyester is to chemically bind both polymers by reacting PPE, modified with a functional group capable of reacting with a saturated polyester, and a saturated polyester by melt-kneading at high temperature to obtain a block or graft copolymer having improved affinity between the two polymer components. In this case, it is necessary to initially add to PPE a functional group that is capable of reacting with a hydroxy end or a carboxyl end group of a saturated polyester or an ester unit in the main chain of a saturated polyester.

In this regard, many proposals have hitherto been proposed for obtaining increased reactivity. They include a method of using a modified PPE obtained by reacting PPE with a compound containing a carbon-to-carbon double bond or a carbon-to-carbon triple bond and a functional group selected from a carboxyl group, an acid anhydride group, an acid amide group, an epoxy group, a hydroxyl group, etc. as disclosed in JP-A-62-257958, JP-A-63-54427, and JP-W-63-500803 (the term "JP-W" as used herein means an "unexamined published international patent application"); a method of using an alkoxysilyl-modified PPE as disclosed in JP-W-63-503392; a method of using an oxazoline-modified PPE as disclosed in JP-A-2-187453; a method of using a polyester modified with hydroxyl- or carboxyl-terminated polystyrene as disclosed in JP-A-2-170852; and a method of compounding a hydroxycarboxylic acid as disclosed in

JP-A-2-129259. In many cases, however, use of the only one functional group incorporated into PPE proved insufficient for improving in compatibility between PPE and saturated polyester, and the resulting molded article is still poor in appearance, gloss, and impact resistance.

Methods proposed to date for improving compatibility between PPE and polyamide resins include compounding of a compound having a carbon-to-carbon double bond and a functional group selected from a carboxyl group, an acid anhydride group, an acid amide group, an imido group, a carboxylic ester group, an epoxy group, an amino group, and a hydroxyl group in the molecule thereof as disclosed, e.g., in JP-A-56-26913 and compounding of a compound having an oxirane ring in the molecule thereof and/or a condensed high polymer obtained from a dihydric phenol and epichlorohydrin as disclosed, e.g., in JP-A-56-47432. Any of these methods aims at improvement in chemical and/or physical compatibility through chemical activation of a partial structure of PPE, probably the terminal phenolic hydroxyl group or the methyl group in the side chain, with a third component during melt-kneading. However, because the terminal phenolic hydroxyl group or the methyl group in the side chain of PPE essentially has limited reactivity, these methods often fail to sufficiently improve compatibility of PPE with polyamide resins. Besides, the third component added remains unreacted in the resulting composition, which causes unfavorable problems such as poor appearances of molded articles due to volatilization of such an unreacted substance during molding and instability in coloring due to a deteriorated hue of the molded article.

## SUMMARY OF THE INVENTION

Accordingly, it is an object of the present invention is to provide a thermoplastic resin composition which exhibits excellent properties inherent in PPE and a saturated polyester resin or a polyamide resin and has a stable finely dispersed texture.

As a result of extensive investigations on modified PPE having improved compatibility with saturated polyester resins or polyamide resins, the inventors have found that (A) PPE having an arbitrary number of hydroxyl groups per molecule, i.e., hydroxy-substituted poly(phenylene ether) ether resin, and (B) a saturated polyester resin or a polyamide resin exhibit extremely high compatibility with each other, and thus reached the present invention.

The present invention provides a thermoplastic resin composition comprising (A) from 10 to 90% by weight (based on the total amount of components (A) and (B)) of a hydroxy-substituted poly(phenylene ether) ether resin comprising p units of a repeating unit represented by formula (I):

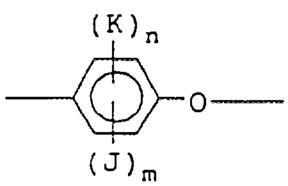

(I)

wherein m represents an integer of from 1 to 4; n represents an integer of from 0 to 3; the sum of m and n is not greater than 4; J represents $(HO)_a$-$R^1$-S-$R^2$-, wherein a represents an integer of from 1 to 6; $R^1$ represents a halogen-substituted or unsubstituted polyvalent aliphatic hydrocarbon group having from 1 to 20 carbon atoms which may contain an oxygen atom in the carbon chain thereof or a halogen-substituted or unsubstituted polyvalent aromatic hydrocarbon group; and $R^2$ represents an alkylene group having from 2 to 20 carbon atoms; when m is 2 or more, the plural J groups may be the same or different; K represents a halogen atom, a primary or secondary alkyl group having from 1 to 20 carbon atoms, an alkenyl group having from 2 to 20 carbon atoms, a phenyl group, an aminoalkyl group having from 1 to 20 carbon atoms, a haloalkyl group having from 1 to 20 carbon atoms, an alkoxy group having from 1 to 20 carbon atoms, or a halohydrocarbonoxy group having from 1 to 20 carbon atoms; and when n is 2 or more, the plural K groups may be the same or different,
and q units of a repeating unit represented by formula (II):

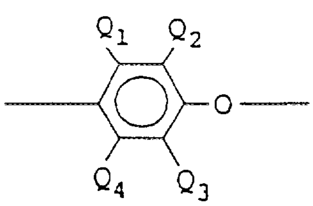

(II)

wherein $Q^1$, $Q^2$, $Q^3$, and $Q^4$ each represent a hydrogen atom, a halogen atom, a primary or secondary alkyl group having from 1 to 20 carbon atoms, an alkenyl group having from 2 to 20 carbon atoms, a phenyl group, an aminoalkyl

group having from 1 to 20 carbon atoms, a haloalkyl group having from 1 to 20 carbon atoms, an alkoxy group having from 1 to 20 carbon atoms, or a halohydrocarbonoxy group having from 1 to 20 carbon atoms, and having a number average degree of polymerization (p + q) of from 25 to 400, with p and q satisfying formula:

$$0.2 \leq 100p/(p + q) \leq 100$$

and (B) from 10 to 90% by weight (based on the total amount of components (A) and (B)) of a thermoplastic resin selected from a saturated polyester resin and a polyamide resin.

## DETAILED DESCRIPTION OF THE INVENTION

The hydroxy-substituted poly(phenylene ether) ether resin (hereinafter abbreviated as PHPE) which can be used as component (A) comprises a PPE-based resin obtained by polymerizing from 0.2 to 100 mol% of at least one phenol derivative having a hydroxyl group in the substituent thereof, represented by formula (V):

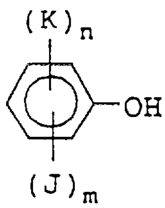

(V)

wherein m, n, J, and K are as defined in formula (I),
and from 0 to 99.8 mol% of at least one phenol derivative represented by formula (VI):

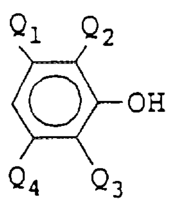

(VI)

wherein $Q^1$, $Q^2$, $Q^3$, and $Q^4$ are as defined in formula (II). The unit "mol%" as used herein means "percentage by mole based on the total amount of the phenol derivatives represented by formulae (V) and (VI)".

In formula (V), specific examples of the moiety $(HO)_a$-$R^1$-S- in J include hydroxyalkylthio groups, e.g., hydroxymethylthio, 2-hydroxyethylthio, 3-hydroxypropylthio, 2-hydroxypropylthio, 2,3-dihydroxypropylthio, 2-hydroxy-1-methylethylthio, dimethylhydroxymethylthio, bis(hydroxymethyl)methylthio, 2-, 3- or 4-hydroxybutylthio, 2-hydroxy-1-ethylethylthio, 2-hydroxy-l-methylpropylthio, 3-hydroxy-1-methylpropylthio, tris(hydroxymethyl)methylthio, 2,2,2-tris(hydroxymethyl) ethylthio, 2-hydroxy-1-hydroxymethylpropylthio, 3-hydroxy-1-hydroxymethylthio, 2,3-dihydroxy-1-hydroxymethylpropylthio, 2-, 3-, 4- or 5-hydroxypentylthio, 2,4- or 3,5-dihydroxypentylthio, 3,4,5,6-tetrahydroxyheptylthio, 6-hydroxyheptylthio, 8-hydroxyoctylthio, 10-hydroxydecylthio, 12-hydroxydodecylthio, 14-hydroxytetradecylthio, 16-hydroxyhexadecylthio, 18-hydroxyoctadecylthio, 20-hydroxyeicosylthio, 2-(2-hydroxyethyloxy) ethylthio, 2-[2,2-bis(hydroxymethyl]ethyloxy)ethylthio, 2-(2,3-dihydroxypropyloxy)ethylthio, 2-(2-hydroxy-1-methylethyloxy)ethylthio, 2-(2-hydroxypropyloxy) ethylthio, 2-(1-chloromethyl-2-hydroxyethyloxy)ethylthio, and 2-(1-chloro-2-hydroxypropyloxy)ethylthio groups; and hydroxyarylthio groups, e.g., 2-, 3- or 4-hydroxyphenylthio, 2,4-, 3,4- or 2,3-dihydroxyphenylthio and 2,4,6-trihydroxyphenylthio groups.

Specific example of the alkylene groups represented by $R^2$ in J include trimethylene, 1,1-dimethyltrimethylene, isopropylethylene, methylethylene, ethylene, and dimethylmethylene groups.

Specific examples of K include primary or secondary alkyl groups, e.g., methyl, ethyl, n-propyl, n-butyl, n-amyl, isoamyl, 2-methylbutyl, n-hexyl, 2,3-dimethylbutyl, 2-, 3- or 4-methylpentyl, heptyl, isopropyl, sec-butyl, and 1-methylpentyl groups; a phenyl group; and halogen atoms, e.g., fluorine, chlorine and bromine atoms.

The phenol derivative of formula (V) having a hydroxyl group in its substituent preferably includes 2-[3-(2-hydroxyethylthio)propyl]-6-methylphenol, 2-[3-(2-hydroxypropylthio)propyl]-6-methylphenol, 2-[3-(2,3-dihydroxypropylthio) propyl]-6-methylphenol, 2-[3-(2-hydroxy-1-methylpropylthio)propyl]-6-methylphenol, 2-[3-(2-hydroxyethylthio)propyl] -6-ethylphenol, 2-[3-(2-hydroxypropylthio)propyl]-6-ethylphenol, 2-[3-(2,3-dihydroxypropylthio)propyl]-6-ethylphenyl, 2-[3-(2-hydroxy-1-methylpropylthio)propyl]-6-ethylphenol, 2-[3-(2-hydroxyethylthio)propyl]-6-propylphenol, 2-[3-(2-hydroxypropylthio)propyl]-6-propylphenol, 2-[3-(2,3-dihydroxypropylthio)propyl]-6-propylphenol,2-[3-(2-hydroxy-1-methylpropylthio)propyl]-6-propylphenol, 2-[3-(2-hydroxyethylthio)propyl]-6-phenylphenol, 2-[3-(2-hydroxypropylthio)propyl]-6-phenylphenol, 2-[3-(2,3-dihydroxypropylthio)propyl]-6-phenylphenol, 2-[3-(2-hydroxy-1-methylpropylthio) propyl] -6-phenylphenol, 2-[2-(2-hydroxyethylthio)-2-(isopropyl)ethyl]-6-methylphenol,2-[2-(2-hydroxypropylthio)-2-(isopropyl) ethyl]-6-methylphenol, 2-[2-(2,3-dihydroxypropylthio)-2-(isopropyl)ethyl]-6-methylphenol, 2-[2-(2-hydroxy-1-methylpropylthio)-2-(isopropyl)ethyl]-6-methylphenol, 2-[3-(2-methyl-2-hydroxyethylthio)propyl]-6-ethylphenol,2-[2-(2-hydroxypropylthio)-2-(isopropyl)ethyl]-6-ethylphenol, 2-[2-(2,3-dihydroxypropylthio)-2-(isopropyl)ethyl]-6-ethylphenol, 2-[2-(2-hydroxy-1-methylpropylthio)-2-(isopropyl)-6-ethylphenol, 2-[2-(2-hydroxyethylthio)-2-(isopropyl)ethyl]-6-propylphenol,2-[2-(2-hydroxypropylthio)-2-(isopropyl)ethyl]-6-propylphenol, 2-[2-(2,3-dihydroxypropylthio)-2-(isopropyl)ethyl] -6-propylphenol, 2-[2-(2-hydroxy-1-methylpropylthio)-2-(isopropyl)ethyl]-6-propylphenol,2-[2-(2-hydroxyethylthio)-2-(isopropyl)ethyl]-6-phenylphenol, 2-[2-(2-hydroxypropylthio)-2-(isopropyl)ethyl]-6-phenylphenol, 2-[2-(2,3-dihydroxypropylthio)-2-(isopropyl)ethyl]-6-phenylphenol, and 2-[2-(2-hydroxy-1-methylpropylthio)-2-(isopropyl)ethyl]-6-phenylphenol. More preferred of these phenol derivatives are 2-[3-(2-hydroxyethylthio)propyl]-6-methylphenol and 2-[3-(2,3-dihydroxypropylthio)propyl]-6-methylphenol.

The above-enumerated phenol derivatives can easily be synthesized by utilizing a known radical addition reaction of a thiol compound to an olefinic double bond as reported, e.g., in Marvel et al., Journal of Polymer Science, Vol. VI, No. 2, pp. 127-143. The starting compounds, i.e., a phenol compound having an olefinic double bond and a thiol compound having a hydroxyl group are both commercially available.

Specific examples of the phenol derivative of formula (VI) include o-, m- or p-cresol, 2,6-, 2,5-, 2,4- or 3,5-dimethylphenol, 2,6-diphenylphenol, 2,6-diethylphenol, 2,3,5-or 2,3,6-trimethylphenol, 2-methyl-6-t-butylphenol, 2-allylphenol, 2,6-diallylphenol, 2-allyl-6-methylphenol, 2-allyl-5-chlorophenol, 2-allyl-3-methoxyphenol, 2-allyl-3-isobutyl-6-methylphenol, and 2-allyl-6-ethylphenol. Preferred among them are 2,6-dimethylphenol, a combination of a major proportion of 2,6-dimethylphenol and a minor proportion of one or more of 2,3,6-trimethylphenol, o-cresol and p-cresol, 2,6-diallylphenol, 2-allyl-6-methylphenol, 2-allyl-6-ethylphenol, and 2-geranyl-6-methylphenol. 2,6-Dimethylphenol is the most preferred.

PHPE may further contain, in addition to the monomers (V) and (VI), a minor proportion (less than 10 mole %) of a polyhydric aromatic compound(s), e.g., bisphenol A, tetrabromobisphenol A, resorcin, hydroquinone, 2,2-bis(3',5'-dimethyl-4'-hydroxyphenyl)propane, bis (3,5-dimethyl-4-hydroxyphenyl)methane, and 3,3',5,5'-tetramethyl-4,4'-dihydroxybiphenyl.

PHPE can generally be prepared by conventional oxidative polymerization for obtaining PPE as described in U.S. Patents 3,422,062, 3,306,874, 3,306,875, 3,257,257, and 3,257,358. Catalysts to be used in the oxidative polymerization are not particularly limited, and any catalyst capable of achieving a desired degree of polymerization may be employed. Cuprous salt-amine, cupric salt-amine-alkali metal hydroxide, manganese salt-amine, and many other catalyst systems are known in this field of art. PHPE to be used in the present invention includes homopolymers, random copolymers, and block copolymers.

The monomer represented by formula (V) is used in an amount preferably of from 1 to 50 mol%, more preferably of from 1 to 40 mol%, most preferably of from 1 to 10 mol%, and further most preferably of from 1.5 to 8 mol% and the monomer represented by formula (VI) is used in an amount preferably of from 50 to 99, more preferably of from 60 to 99, most preferably of from 90 to 99, and further most preferably of from 92 to 98.5.

PHPE has a polymerization degree of gnerally from 10 to 5,000, and preferably from 25 to 400, and a number average molecular weight usually of from 3,000 to 50,000, and preferably from 5,000 to 30,000.

Preferable PHPE comprises x units of a repeating unit represented by formula (III):

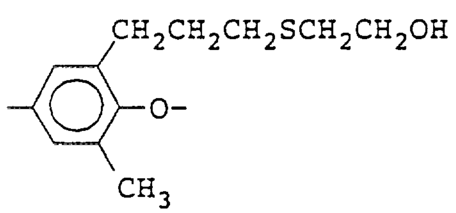

(III)

and y units of a repeating unit represented by formula (IV):

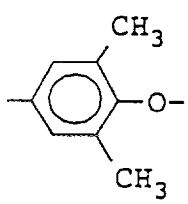

(IV)

in which x and y satisfy formula:

$$1 \leq 100x/(x + y) \leq 50$$

Particularly preferred PHPE is a random copolymer obtained from 2-[3-(2-hydroxyethylthio)propyl]-6-methylphenol as a monomer (V) and 2,6-dimethylphenol as a monomer (VI). Component (B) is selected from a saturated polyester resin and a polyamide resin.

Various kinds of saturated polyester resins can be used as component (B). Included, for example, are those obtained by polycondensation of a dicarboxylic acid or a lower alkyl ester, halide or anhydride thereof and a glycol component. Suitable dicarboxylic acids include aliphatic dicarboxylic acids, e.g., oxalic acid, malonic acid, succinic acid, glutaric acid, adipic acid, suberic acid, azelaic acid, and sebacic acid; aromatic dicarboxylic acids, e.g., terephthalic acid, isophthalic acid, p,p'-dicarboxydiphenylsulfone, p-carboxyphenoxyacetic acid, p-carboxyphenoxypropionic acid, p-carboxyphenoxybutyric acid, p-carboxyphenoxyvaleric acid, 2, 6-naphthalenedicarboxylic acid, and 2,7-naphthalenedicarboxylic acid; and mixtures of these carboxylic acids. Suitable diol compounds include aliphatic diol compounds, e.g., straight chain alkylene glycol compounds having from 2 to 12 carbon atoms (e.g., ethylene glycol, 1,3-trimethylenediol, 1,4-tetramethylenediol, 1,6-hexamethylenediol, 1,12-dodecamethylenediol); aromatic diol compounds, e.g., p-xylenediol, pyrocatechol, resorcinol, hydroquinone, and alkyl-substituted compounds thereof; and 1,4-cyclohexanedimethanol.

Other suitable polyesters include those obtained by ring-open polymerization of a lactone, e.g., polypivalolactone and poly(ε-caprolactone) and those capable of forming a liquid crystal in a molten state, called thermotropic liquid crystal polymer (TLCP), e.g., "X 7G" produced by Eastman Kodak Co., "Xydar" produced by Dartco Co., Ltd., "Econol" produced by Sumitomo Chemical Co., Ltd., and "Vectra" produced by Höechst Celanese Co., Ltd.

Preferable saturated polyester resins (preferably having a number mean molecular weight of from 5,000 to 100,000) are PBT, polyethylene terephthalate, polynaphthalene terephthalate, poly(1,4-cyclohexanedimethylene terephthalate, and TLCP.

The polyamide resins as component (B) are resins having an amide linkage -CONH- in the main chain thereof and capable of melting on heating. Typical examples of the polyamide resins are nylon 4, nylon 6, nylon 6,6, nylon 4,6, nylon 12, and nylon 6,10. In addition, low-crystalline or amorphous polyamide resins containing an aromatic diamine and an aromatic dicarboxylic acid as monomer components or mixtures thereof may also be used.

Preferable polyamide resins are nylon 6, nylon 6,6, and amorphous polyamide. Particularly preferred are those having a relative viscosity of from 2.0 to 8.0 as measured according to JIS K6810 (25°C in 98% sulfuric acid).

From the standpoint of impact resistance and a balance between thermal rigidity and solvent resistance, the proportion of component (A) in the thermoplastic resin composition according to the present invention ranges from 10 to 90% by weight, preferably from 20 to 80% by weight, and more preferably from 30 to 70% by weight, with that of component (B) ranging from 10 to 90% by weight, preferably from 20 to 80% by weight, and more preferably from 30 to 70% by weight, based on the total amount of components (A) and (B).

If desired, the part of component (A) may be replaced with other additional resin components such as unmodified PPE (e.g., poly(2,6-dimethyl-1,4-phenylene ether)), polystyrene, styrene-butadiene block copolymer, ABS, poly(phenylene sulfide), and polycarbonate, with the proviso that the replaced amount is in the range of 80% or less by weight of the amount of component (A).

If desired, the thermoplastic resin composition may further contain up to 20 parts by weight of compounding additives, such as antioxidants, weathering agents, nucleating agents, flame retarders, plasticizers, flow modifiers, and so on. The composition may furthermore contain up to 50 parts by weight of organic or inorganic fillers, e.g., glass fiber, mica, talc, wollastonite, potassium titanate, calcium carbonate, and silica, and up to 5 parts by weight of a dispersing agent for colorants. In addition, it is effective to add from 5 to 30 parts by weight of an impact modifiers, e.g., a styrene-butadiene copolymer rubber or a hydrogenation product thereof, an ethylene-propylene copolymer rubber, an ethylene-propylene-diene copolymer rubber, these copolymer rubbers modified with an $\alpha,\beta$-unsaturated carboxylic acid anhydride, an unsaturated glycidyl ester or an unsaturated glycidyl ether, and a copolymer of an unsaturated epoxy compound and an ethylenenically unsaturated compound. The unit "parts by weight" as used herein means "parts by weight per 100 parts of the total amount of the above-described resin components".

Each of the above-described additive may be used either individually or in combinations of two or more.

The thermoplastic resin composition of the present invention may be obtained through melt kneading, which may be conducted by a conventional kneading method used for thermoplastic resins. For example, the resinous components, which may be powdery or granular, can be uniformly mixed together with, any desired additive ingredients by a mixing means, such as a Henschel mixer, ribbon blender, or V-shaped blender and then kneaded with a kneading means, such as a single-screw or multi-screw extruder, roller mill, or Banbury mixer.

Shaping methods for the thus-produced thermoplastic resin composition of the present invention are not particularly limited, and conventional thermoplastic resin molding or forming techniques, such as injection molding, blow molding, extrusion, sheet forming, thermoforming, laminating, or press molding may be used.

The present invention is now illustrated in greater detail with reference to Reference Examples and Examples, but it should be understood that the present invention is not construed as being limited thereto. All the parts, percents and

ratios are by weight unless otherwise indicated.

In Examples and Comparative Examples, the following materials were used.

Saturated Polyester:

PBT ("Novadur 5010" produced by Mitsubishi Chemical Corporation). Used after drying in vacuo at 100°C for 24 hours.

Polyamide:

Nylon 6 ("Ultramid KR 4411" produced by BASF).

Maleic Anhydride:

Reagent grade produced by Wako Chemicals Co., Ltd.

PPE:

Poly(2,6-dimethyl-1,4-phenylene ether) having an intrinsic viscosity of 0.31 dℓ/g (30°C, in chloroform) (product of Nippon Polyether Co., Ltd.).

PHPE:

PHPE-1 through 5 were prepared from the repeating units of formulae (III) and (IV) according to Reference Examples 2 to 6 described below. The hydroxyl group content, number average molecular weight (Mn), and molecular weight distribution value (Q value) of PHPE-1 to 5 are shown in Table 1 below. The hydroxyl group content was calculated from the integrated intensity of the signals assigned to the methylene group having bonded thereto a hydroxyl group in the vicinity of 3.6 ppm in the $^1$H-NMR spectrum and expressed in terms of mol% based on the number of the phenylene repeating units in the main chain. Mn and Q value were obtained by gel-permeation chromatography (GPC) and reduced to polystyrene.

TABLE 1

| Resin No. | OH Content (mol%) | Mn | Q Value |
|---|---|---|---|
| PHPE-1 | 2.4 | 9950 | 1.84 |
| PHPE-2 | 1.5 | 10300 | 1.81 |
| PHPE-3 | 3.0 | 23100 | 2.24 |
| PHPE-4 | 4.6 | 14930 | 2.79 |
| PHPE-5 | 4.4 | 11400 | 2.17 |

REFERENCE EXAMPLE 1

Synthesis of Phenol Derivative

In 785 parts of ethanol were dissolved 496 parts of 2-allyl-6-methylphenol and 392 parts of 2-mercaptoethanol in a nitrogen atmosphere. To the solution was added dropwise 1600 parts of a 1.9% ethanol solution of 2,2'-azobisisobutyronitrile at a refluxing temperature to conduct a reaction for 10 hours. After ethanol was removed in an evaporator, the residue was heated to 110°C in vacuo to remove the unreacted 2-mercaptoethanol and the by-produced 2-hydroxyethyl disulfide to obtain 2-[3-(2-hydroxyethylthio)propyl]-6-methylphenol. $^1$H-NMR analysis revealed that the rate of reaction of the allyl group was about 100% and the reaction selectivity was about 100%.

REFERENCE EXAMPLE 2

Synthesis of PHPE-1

In 2890 parts of xylene and 766 parts of methanol were dissolved 74 parts of the phenol derivative prepared in Reference Example 1, 960 parts of 2,6-dimethylphenol, and 20 parts of sodium hydroxide. Then, 40 parts of diethanolamine, 12.6 parts of dibutylamine, and 0.96 part of manganese chloride tetrahydrate dissolved in 316 parts of methanol were added to the solution in this order. A polymerization reaction was conducted in two divided stages. The former stage polymerization was carried out by introducing oxygen gas into the reaction system at a rate of 0.8 ℓ/min while maintaining the system at 40°C until a solid began to precipitate. The latter stage polymerization was effected by introducing 0.8 ℓ/min of oxygen gas and 8 ℓ/min of nitrogen gas while maintaining the system at 30°C until precipitation of a polymer ceased. The resulting polymer was washed with methanol rendered acidic with hydrochloric acid to deactivate the catalyst to obtain PHPE-1 in a yield of 90%.

REFERENCE EXEMPLE 3

Synthesis of PHPE-2

PHPE-2 was prepared in the same manner as in Reference Example 1, except for using 55.5 parts of the phenol derivative prepared in Reference Example 1, 970 parts of 2,6-dimethylphenol, 9.1 parts of sodium hydroxide, 20.5 parts of diethanolamine, and 0.48 parts of manganese chloride tetrahydrate. The yield of the product was 91%.

REFERENCE EXAMPLE 4

Synthesis of PHPE-3

PHPE-3 was prepared in the same manner as in Reference Example 2, except for using 92 parts of the phenol derivative (III) prepared in Reference Example 1 and 952 parts of 2,6-dimethylphenol. The yield of the product was 91%.

REFERENCE EXAMPLE 5

Synthesis of PHPE-4

PHPE-4 was prepared in the same manner as in Reference Example 2, except for using 111.2 parts of 2-[3-(2-hydroxyethylthio)propyl]-6-methylphenol and 949 parts of 2,6-dimethylphenol. The yield of the product was 93%.

REFERENCE EXAMPLE 6

Synthesis of PHPE-5

PHPE-5 was prepared in the same manner as in Reference Example 2, except for using 111.2 parts of 2-[3-(2-hydroxyethylthio)propyl)-6-methylphenol and 949 parts of 2,6-dimethylphenol. The yield of the product was 94%.

REFERENCE EXAMPLE 7

Synthesis of Comparative Modified PPE

In a 10 ℓ-volume stainless steel autoclave were charged 4300 parts of xylene and 500 parts of PPE ("H-30 Grade" produced by Nippon Polyether K.K.; intrinsic viscosity: 0.3 dℓ/g), and the mixture was stirred to dissolve PPE. Twenty parts of ethylene oxide was introduced into the solution under pressure, and the mixture was allowed to react at 150°C for 5 hours. After cooling, the reaction mixture was poured into 15600 parts of methanol, and the precipitated polymer was collected by filtration and washed with methanol to obtain alcoholic hydroxyl group-modified PPE in which the terminal hydroxyl group of PPE was substituted by an aliphatic alcoholic hydroxyl group. The yield of the polymer was 99%, and the hydroxyl content of the modified PPE was 1.2 mol%.

EXAMPLES 1 TO 3

PHPE shown in Table 2 below and PBT were dry blended at a ratio of 4:6 to obtain a blend weighing about 50 g. The blend was kneaded in "Labo Plastomill" manufactured by Toyo Seiki Seisaku-sho, Ltd. at 250°C and 180 rpm for 10 minutes. The resulting thermoplastic resin composition was evaluated according to the following test methods. The results obtained are shown in Table 2.

Dispersed Particle Diameter:

The diameter of dispersed PHPE particles was measured with a scanning electron microscope ("S-2400 Model" manufactured by Hitachi, Ltd.).

Appearance of Molded Article:

The molten resin composition was molded by means of an injection molding machine "CS-183 MMX MINIMAX" manufactured by Custom Scientific Co. The appearance, especially delamination, of the molded article was observed and rated as follows.

| | |
|---|---|
| Good | No problem for practical use |
| Medium | Unacceptable for practical use |
| Poor | Extremely defective |

Impact Strength of Molded Article:

The molten resin composition was injection molded by means of "CS-183 MMX MINIMAX" at 280°C to prepare a specimen 31.5 mm long, 6.2 mm wide, and 3.2 mm thick. The unnotched Izod impact strength at 23°C was measured by means of an Izod impact tester "MINI MAX CS-138TI Model" manufactured by Custom Scientific Co.

COMPARATIVE EXAMPLE 1

The same procedure as in Example 1 was repeated, except for replacing PHPE-2 with poly(2,6-dimethyl-1,4-phenylene ether) having an Mn of 10,000. The results of evaluation are shown in Table 2.

EXAMPLE 4

The same procedure as in Example 2 was repeated, except for changing the PHPE-1 to PBT ratio to 8:2. The results of evaluation are shown in Table 2.

EXAMPLE 5

The same procedure as in Example 2 was repeated, except for additionally using PPE having an Mn of 10,000 at a PHPE-2:PBT:PPE ratio of 1:2:1. The results of evaluation are shown in Table 2.

COMPARATIVE EXAMPLE 2

The same procedure as in Example 5 was repeated, except for replacing PHPE-1 with the modified PPE as prepared in Reference Example 7. The results of evaluation are shown in Table 2.

EXAMPLE 6

The same procedure as in Example 1 was repeated, except for replacing PHPE-2 with PHPE-5. The results of evaluation are shown in Table 2.

TABLE 2

| Example No. | PHPE | (A)/(B) Ratio | Dispersed Particle Diameter (μm) | Appearance | Izod Impact Strength (kg•cm/cm²) |
|---|---|---|---|---|---|
| Example 1 | PHPE-2 | 4/6 | 0.6-2* | good | 32.6 |
| Example 2 | PHPE-1 | 4/6 | 0.3-1* | good | 40.6 |
| Example 3 | PHPE-4 | 4/6 | 0.5-5* | good | 35.5 |
| Compara. Example 1 | unmodified PPE | 4/6 | 10-20* | poor | 10.8 |
| Example 4 | PHPE-1 | 8/2 | 0.1-1** | good | 7.5 |
| Example 5 | PHPE-1 | 25/50/25*** | 0.5-1* | good | 30.3 |
| Compara. Example 2 | modified PPE | 25/50/25*** | 3-5* | medium | 14.7 |
| Example 6 | PHPE-5 | 4/6 | 0.5-3* | good | 29.2 |

Note: *: Domain = PHPE (or PPE); matrix = PBT

**: Domain = PBT; matrix = PHPE (or PPE)

***: PHPE (or modified PPE):PBT:PPE

EXAMPLES 7 TO 13 AND COMPARATIVE EXAMPLES 3 TO 8

The components shown in Table 3 below were dry blended. Nylon 6 was used after drying in vacuo at 80°C for 15 hours. The blend was kneaded in Labo Plastomill at 280°C and 60 rpm for 5 minuets, followed by grinding. The resulting

granulated resin composition was molded in a compression molding machine manufactured by Toyo Seiki Seisaku-sho, Ltd. at 280°C to obtain a sheet 180 mm in length, 180 mm in width and 2 mm in thickness. The sheet was cut to obtain specimens for measurements of physical properties. Each specimen was subjected to evaluation after being preserved in a desiccator for 2 to 6 days. The results of evaluation are shown in Table 3.

Bending Modulus:

Measured on a specimen 25 mm in width and 80 mm in length by means of an Instron tester according to JIS K7203. Measurements at 80°C were made after maintaining the specimen and a load wedge in a thermostat set at 80°C±1°C for at least 20 minutes.

Izod Impact Strength:

Unnotched Izod impact strength at 23°C was measured on three thicknesses of a 2 mm thick specimen fixed together with cellophane tape by means of an Izod impact tester manufactured by Toyo Seiki Seisaku-sho, Ltd. according to JIS K7110.

Hue:

L value was measured with a differential colorimeter manufactured by Minolta Co., Ltd. according to JIS Z8729.

Disperse Phase:

A cut piece of a molded article was soaked in toluene at room temperature for 5 seconds to selectively dissolve PHPE (or PPE) particles. The dispersed particle diameter was then measured under a scanning electron microscope "S-2400 Model" manufactured by Hitachi, Ltd.

TABLE 3

| | Example No. | | | | | | | Comparative Example No. | | | | | |
|---|---|---|---|---|---|---|---|---|---|---|---|---|---|
| | 7 | 8 | 9 | 10 | 11 | 12 | 13 | 1 | 2 | 3 | 4 | 5 | 6 |
| **Composition (%):** | | | | | | | | | | | | | |
| PHPE-1 | 50 | - | - | 25 | 30 | 70 | - | - | - | 95 | 5 | - | - |
| PHPE-2 | - | 50 | - | - | - | - | - | - | - | - | - | - | - |
| PHPE-3 | - | - | 50 | - | - | - | - | - | - | - | - | - | - |
| PHPE-5 | - | - | - | - | - | - | 60 | - | - | - | - | - | - |
| PPE | - | - | - | 25 | - | - | - | 50 | 49 | - | - | 100 | - |
| Nylon 6 | 50 | 50 | 50 | 50 | 70 | 30 | 40 | 50 | 49 | 5 | 95 | - | 100 |
| Maleic anhydride | - | - | - | - | - | - | - | - | 2 | - | - | - | - |
| **Evaluation:** | | | | | | | | | | | | | |
| Bending modulus ($kg/cm^2$): | | | | | | | | | | | | | |
| 23°C | 22900 | 22500 | 21000 | 22000 | 23200 | 24000 | 22000 | 20900 | 21400 | 21000 | 22500 | 21000 | 23000 |
| 80°C | 8700 | 8600 | 8200 | 8300 | 5600 | 13100 | 8100 | 8900 | 8700 | 19500 | 3900 | 20200 | 3800 |
| Unnotched Izod Impact Strength ($kg\cdot cm/cm^2$) | 39.2 | 46.8 | 48.5 | 35.3 | 42.1 | 14.4 | 40.6 | 12.4 | 29.0 | 4.5 | 52.0 | 4.0 | 54.0 |
| Hue (L Value) | 43 | 41 | 42 | 44 | 48 | 42 | 41 | 44 | 19 | 63 | 72 | 68 | 80 |
| Dispersed Particle Diameter (μm) | 1-3 | 1-3 | 1-5 | 1-3 | 0.5-1 | 1-2 | 1-2 | 2-10 | 1-4 | ≤0.5 | ≤0.5 | - | - |

While the invention has been described in detail and with reference to specific examples thereof, it will be apparent

to one skilled in the art that various changes and modifications can be made therein.

**Claims**

1. A thermoplastic resin composition comprising (A) from 10 to 90% by weight of a hydroxy-substituted poly(phenylene ether) ether resin comprising p repeating units represented by formula (I):

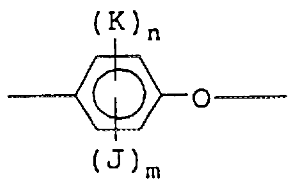

(I)

wherein m represents an integer of from 1 to 4; n represents an integer of from 0 to 3; the sum of m and n is not greater than 4; J represents $(HO)_a\text{-}R^1\text{-}S\text{-}R^2\text{-}$, wherein a represents an integer of from 1 to 6; $R^1$ represents a halogen-substituted or unsubstituted polyvalent aliphatic hydrocarbon group having from 1 to 20 carbon atoms which may contain an oxygen atom in the carbon chain thereof or a halogen-substituted or unsubstituted polyvalent aromatic hydrocarbon group having from 1 to 20 carbon atoms; and $R^2$ represents an alkylene group having from 2 to 20 carbon atoms; when m is 2 or more, the plural J groups may be the same or different; K represents a halogen atom, a primary or secondary alkyl group having from 1 to 20 carbon atoms, an alkenyl group having from 2 to 20 carbon atoms, a phenyl group, an aminoalkyl group having from 1 to 20 carbon atoms, a haloalkyl group having from 1 to 20 carbon atoms, an alkoxy group having from 1 to 20 carbon atoms, or a halohydrocarbonoxy group having from 1 to 20 carbon atoms; and when n is 2 or more, the plural K groups may be the same or different,
and q repeating units represented by formula (II):

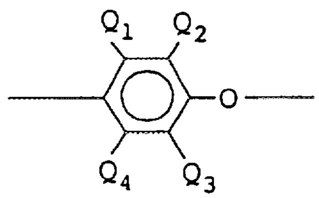

(II)

wherein $Q^1$, $Q^2$, $Q^3$, and $Q^4$ each represent a hydrogen atom, a halogen atom, a primary or secondary alkyl group having from 1 to 20 carbon atoms, an alkenyl group having from 2 to 20 carbon atoms, a phenyl group, an aminoalkyl group having from 1 to 20 carbon atoms, a haloalkyl group having from 1 to 20 carbon atoms, an alkoxy group having from 1 to 20 carbon atoms, or a halohydrocarbonoxy group having from 1 to 20 carbon atoms, with p and q satisfying formulae:

$$p + q = 25 \text{ to } 400$$
$$0.2 \leq 100p/(p + q) \leq 100$$

and (B) from 10 to 90% by weight of a thermoplastic resin selected from a saturated polyester resin and a polyamide resin.

2. A thermoplastic resin composition as claimed in Claim 1, wherein said hydroxy-substituted poly(phenylene ether) ether resin (A) is a copolymer comprising from 0.5 to 50 mol% of a repeating unit represented by formula (III):

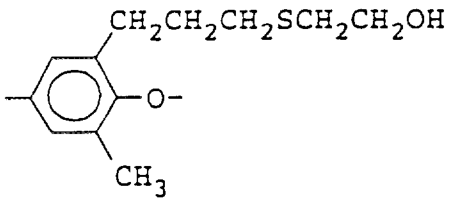

(III)

and from 50 to 99.5 mol% of a repeating unit represented by formula (IV):

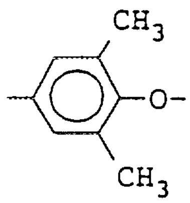

(IV)

3. A thermoplastic resin composition as claimed in Claim 1, wherein said hydroxy-substituted poly(phenylene ether) ether resin (A) is a copolymer comprising from 1 to 40 mol% of a repeating unit represented by formula (III):

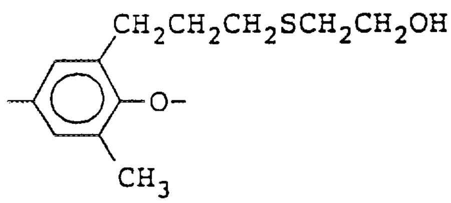

(III)

and from 60 to 99 mol% of a repeating unit represented by formula (IV):

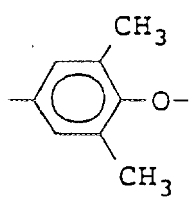

(IV)

4. A thermoplastic resin composition as claimed in Claim 1, wherein said hydroxy-substituted poly(phenylene ether) ether resin (A) is a copolymer comprising from 1.5 to 8 mol% of a repeating unit represented by formula (III):

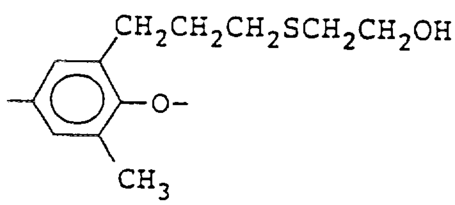

(III)

and from 92 to 98.5 mol% of a repeating unit represented by formula (IV):

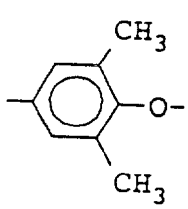

(IV)

5. A thermoplastic resin composition as claimed in Claim 1, wherein said saturated polyester resin (B) is polybutylene terephthalate.

6. A thermoplastic resin composition as claimed in Claim 1, wherein said polyamide resin is nylon 6.

## Patentansprüche

1. Thermoplastische Harzzusammensetzung, die folgendes umfaßt: (A) von 10 bis 90 Gew.-% eines Hydroxy-substituierten Poly(phenylenether)etherharzes, umfassend p sich wiederholende Einheiten, die durch die Formel (I) repräsentiert werden:

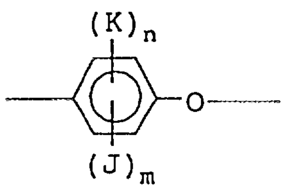

(I)

worin m eine ganze Zahl von 1 bis 4 darstellt; n stellt eine ganze Zahl von 0 bis 3 dar; die Summe aus m und n ist nicht größer als 4; J repräsentiert $(HO)_a$-$R^1$-S-$R^2$-, worin a eine ganze Zahl von 1 bis 6 darstellt; $R^1$ ist eine Halogen-substituierte oder unsubstituierte polyvalente aliphatische Kohlenwasserstoffgruppe mit 1 bis 20 Kohlenstoffatomen, die ein Sauerstoffatom in der Kohlenstoffkette enthalten kann, oder eine Halogen-substituierte oder unsubstituierte polyvalente aromatische Kohlenwasserstoffgruppe mit 1 bis 20 Kohlenstoffatomen; und $R^2$ ist eine Alkylengruppe mit 2 bis 20 Kohlenstoffatomen; wenn m = 2 oder mehr ist, so können die verschiedenen J-Gruppen identisch oder voneinander verschieden sein; K repräsentiert ein Halogenatom, eine primäre oder sekundäre Alkylgruppe mit 1 bis 20 Kohlenstoffatomen, eine Alkenylgruppe mit 2 bis 20 Kohlenstoffatomen, eine Phenylgruppe, eine Aminoalkylgruppe mit 1 bis 20 Kohlenstoffatomen, eine Halogenalkylgruppe mit 1 bis 20 Kohlenstoffatomen, eine Alkoxygruppe mit 1 bis 20 Kohlenstoffatomen oder eine Halogenkohlenwasserstoffoxigruppe mit 1 bis 20 Kohlenstoffatomen; und wenn n = 2 oder mehr ist, so können die verschiedenen K-Gruppen identisch oder voneinander verschieden sein,
und q sich wiederholende Einheiten, die durch die Formel (II) repräsentiert werden:

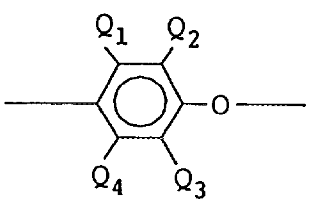

(II)

worin $Q^1$, $Q^2$, $Q^3$ imd $Q^4$ jeweils ein Wasserstoffatom, ein Halogenatom, eine primäre oder sekundäre Alkylgruppe mit 1 bis 20 Kohlenstoffatomen, eine Alkenylgruppe mit 2 bis 20 Kohlenstoffatomen, eine Phenylgruppe, eine Aminoalkylgruppe mit 1 bis 20 Kohlenstoffatomen, eine Halogenalkylgruppe mit 1 bis 20 Kohlenstoffatomen, eine Alkoxygruppe mit 1 bis 20 Kohlenstoffatomen oder eine Halogenkohlenwasserstoffoxigruppe mit 1 bis 20 Kohlenstoffatomen repräsentieren, wobei p und q die folgenden Formeln erfüllen:

$$p + q = 25 \text{ bis } 400$$
$$0{,}2 \leq 100p/(p + q) \leq 100$$

und (B) von 10 bis 90 Gew.-% eines thermoplastischen Harzes, ausgewählt aus einem gesättigten Polyesterharz und einem Polyamidharz.

2. Thermoplastische Harzzusammensetzung gemäß Anspruch 1, dadurch **gekennzeichnet**, daß das Hydroxy-substituierte Poly(phenylenether) etherharz (A) ein Copolymer ist, das folgendes umfaßt: von 0,5 bis 50 Mol-% einer sich wiederholenden Einheit, repräsentiert durch die Formel (III):

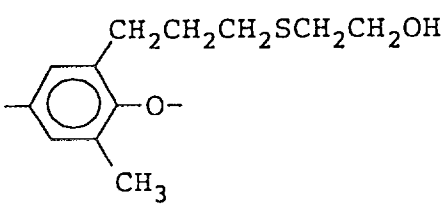

(III)

und von 50 bis 99,5 Mol-% einer sich wiederholenden Einheit, die durch die Formel (IV) repräsentiert wird:

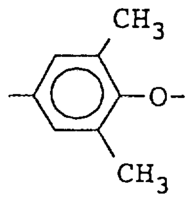

(IV)

3. Thermoplastische Harzzusammensetzung gemäß Anspruch 1, dadurch **gekennzeichnet**, daß das Hydroxy-substituierte Poly(phenylenether)etherharz (A) ein Copolymer ist, das folgendes umfaßt: von 1 bis 40 Mol-% einer sich wiederholenden Einheit, repräsentiert durch die Formel (III):

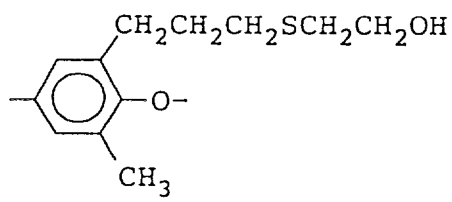

(III)

und von 60 bis 99 Mol-% einer sich wiederholenden Einheit, die durch die Formel (IV) repräsentiert wird:

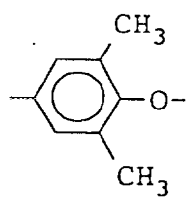

(IV)

4. Thermoplastische Harzzusammensetzung gemäß Anspruch 1, dadurch **gekennzeichnet**, daß das Hydroxy-substituierte Poly (phenylenether) etherharz (A) ein Copolymer ist, das folgendes umfaßt: von 1,5 bis 8 Mol-% einer sich wiederholenden Einheit, repräsentiert durch die Formel (III):

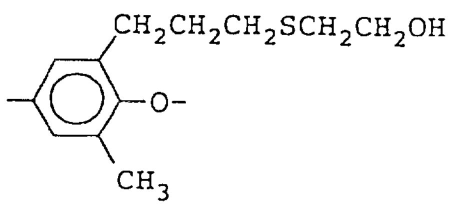

(III)

und von 92 bis 98,5 Mol-% einer sich wiederholenden Einheit, die durch die Formel (IV) repräsentiert wird:

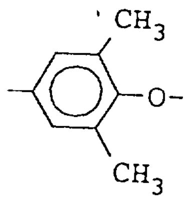

(IV)

**5.** Thermoplastische Harzzusammensetzung gemäß Anspruch 1, dadurch **gekennzeichnet**, daß das gesättigte Polyesterharz (B) Polybutylenterephthalat ist.

**6.** Thermoplastische Harzzusammensetzung gemäß Anspruch 1, dadurch **gekennzeichnet,** daß das Polyamidharz Nylon-6 ist.

**Revendications**

**1.** Composition de résine thermoplastique comprenant (A) de 10 à 90 % en masse d'une résine de polyphénylèneéther hydroxy-substitué/polyéther comprenant p motifs récurrents représentés par la formule (I) :

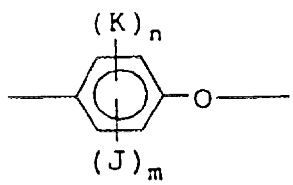

(I)

dans laquelle m représente un nombre entier compris entre 1 et 4 ; n représente un nombre entier compris entre 0 et 3 ; la somme de m et n est inférieure ou égale à 4 ; J représente $(HO)_a$-$R^1$-S-$R^2$-, a représentant un nombre entier compris entre 1 et 6 ; $R^1$ représentant un groupement hydrocarboné aliphatique polyvalent halogène-substitué ou non substitué, ayant de 1 à 20 atomes de carbone, qui peut contenir un atome d'oxygène dans sa chaîne carbonée, ou un groupement hydrocarboné aromatique polyvalent halogène-substitué ou non substitué, ayant de 1 à 20 atomes de carbone, et $R^2$ représentant un groupement alkylène ayant de 2 à 20 atomes de carbone ; lorsque m est supérieur ou égal à 2, les multiples groupements J peuvent être identiques ou différents ; K représente un atome d'halogène, un groupement alkyle primaire ou secondaire ayant de 1 à 20 atomes de carbone, un groupement alcényle ayant de 2 à 20 atomes de carbone, un groupement phényle, un groupement aminoalkyle ayant de 1 à 20 atomes de carbone, un groupement halogénoalkyle ayant de 1 à 20 atomes de carbone, un groupement alcoxy ayant de 1 à 20 atomes de carbone ou un groupement halogénohydrocarbyloxy ayant de 1 à 20 atomes de carbone ; et lorsque n est supérieur ou égal à 2, les multiples groupements K peuvent être identiques ou différents,
et q motifs récurrents représentés par la formule (II) :

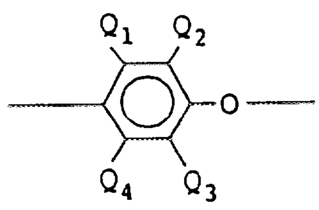

(II)

dans laquelle $Q^1$, $Q^2$, $Q^3$ et $Q^4$ représentent chacun un atome d'hydrogène, un atome d'halogène, un groupement alkyle primaire ou secondaire ayant de 1 à 20 atomes de carbone, un groupement alcényle ayant de 2 à 20 atomes de carbone, un groupement phényle, un groupement aminoalkyle ayant de 1 à 20 atomes de carbone, un groupement halogénoalkyle ayant de 1 à 20 atomes de carbone, un groupement alcoxy ayant de 1 à 20 atomes de carbone ou un groupement halogénohydrocarbyloxy ayant de 1 à 20 atomes de carbone,
p et q répondant aux formules :

$$p + q = 25 \text{ à } 400$$
$$0{,}2 \leq 100p/(p + q) \leq 100$$

et (B) de 10 à 90 % en masse d'une résine thermoplastique choisie entre une résine de polyester saturé et une résine de polyamide.

2. Composition de résine thermoplastique selon la revendication 1, dans laquelle ladite résine de polyphénylèneéther hydroxy-substitué/polyéther (A) est un copolymère comprenant de 0,5 à 50 % en mole d'un motif récurrent représenté par la formule (III) :

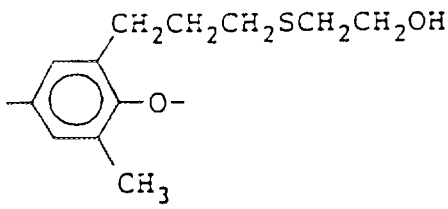

(III)

et de 50 à 99,5 % en mole d'un motif récurrent représenté par la formule (IV) :

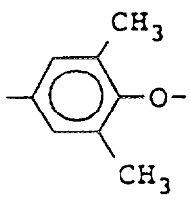

(IV)

3. Composition de résine thermoplastique selon la revendication 1, dans laquelle ladite résine de polyphénylèneéther hydroxy-substitué/polyéther (A) est un copolymère comprenant de 1 à 40 % en mole d'un motif récurrent représenté par la formule (III) :

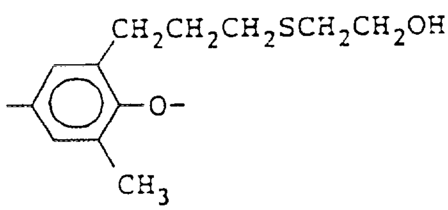

(III)

et de 60 à 99 % en mole d'un motif récurrent représenté par la formule (IV) :

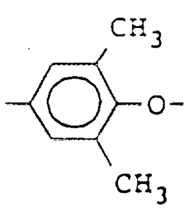

(IV)

4. Composition de résine thermoplastique selon la revendication 1, dans laquelle ladite résine de polyphénylèneéther hydroxy-substitué/polyéther (A) est un copolymère comprenant de 1,5 à 8 % en mole d'un motif récurrent représenté par la formule (III) :

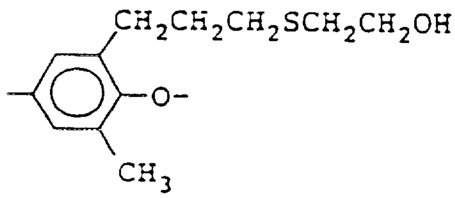

(III)

et de 92 à 98,5 % en mole d'un motif récurrent représenté par la formule (IV) :

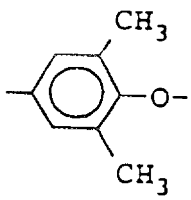

(IV)

**5.** Composition de résine thermoplastique selon la revendication 1, dans laquelle ladite résine de polyester saturé (B) est le poly(téréphtalate de butylène).

**6.** Composition de résine thermoplastique selon la revendication 1, dans laquelle ladite résine de polyamide est le Nylon 6.